## Europäisches Patentamt

## European Patent Office

## Office européen des brevets

(19)

(11) Veröffentlichungsnummer: **0 108 265**
**B1**

---

(12) # EUROPÄISCHE PATENTSCHRIFT

(45) Veröffentlichungstag der Patentschrift:
**29.03.89**

(21) Anmeldenummer: **83110019.3**

(22) Anmeldetag: **06.10.83**

(51) Int. Cl.⁴: **G 21 C 17/10**

---

(54) **Verfahren und Vorrichtung zur Überwachung der Reaktivitätsbilanz des Core eines Kernreaktors und zur Diagnose von Reaktivitätsstörungen.**

---

(30) Priorität: **18.10.82 DE 3238522**

(43) Veröffentlichungstag der Anmeldung:
**16.05.84 Patentblatt 84/20**

(45) Bekanntmachung des Hinweises auf die Patenterteilung:
**29.03.89 Patentblatt 89/13**

(84) Benannte Vertragsstaaten:
**DE FR GB IT NL**

(56) Entgegenhaltungen:
**EP-A-0 065 155**
**FR-A-2 004 090**
**FR-A-2 192 318**

**IAEA-SM-244/28, September 1979, Seiten 429-446;**
**J.C. GAUTHIER et al.: "Comparateur de reactivite"**
**IEEE TRANSACTIONS ON AUTOMATIC CONTROL,**
**Band AC-28, Nr. 3, März 1983, Seiten 406-415, IEEE,**
**New York, US; J.L. TYLEE: "On-line failure**
**detection in nuclear power plant instrumentation"**

(73) Patentinhaber: **INTERATOM Gesellschaft mit beschränkter Haftung, Friedrich- Ebert- Strasse, D-5060 Bergisch- Gladbach 1 (DE)**

(72) Erfinder: **Holick, Anton, Dipl.- Phys., Steinstrasse 10, D-5060 Bergisch- Gladbach (DE)**

(74) Vertreter: **Mehl, Ernst, Dipl.- Ing., Postfach 22 13 17, D-8000 München 22 (DE)**

---

## Beschreibung

Die vorliegende Erfindung betrifft ein Verfahren nach dem Oberbegriff des Hauptanspruchs und eine Anordnung zur Durchführung des Verfahrens.

In der älteren europäischen Patentanmeldung EP-A-65 155 ist angegeben, daß außer den direkten Meßwerten der Instrumentierung eines Reaktors durch parameter-adaptive Kalmanfilter auch indirekte Meßwerte von nicht direkt meßbaren Größen erhältlich sind. Die so zur Verfügung stehenden indirekten Meßwerte eröffnen weitergehende Möglichkeiten bei der Überwachung von Reaktorkernen, so, wie in der vorliegenden Anmeldung behandelt, bei der Überwachung der Reaktivitätsbilanz und der Diagnose von Reaktivitätsstörungen.

Wichtige Grundlagen hierzu sind beispielsweise in dem Buch von D. Schmidt, "Reaktortechnik", Wissenschaft und Technik, G. Braun, Karlsruhe, Band 2, Seite 148 - 159 behandelt.

Zum Stand der Technik gibt es auch einen Beitrag von J.C. Gauthier, "Reactivity Balance Meter: Feedback Effects Measurements at Phenix", NEACRP Annual Meeting, Idaho, 22/24 September 1980. Danach ist es bisher bekannt, eine Überwachung der Reaktivität nach folgendem Prinzip durchzuführen:

Die direkt gemessene Reaktivität wird mit der laufend von diversitären Messungen berechneten Reaktivität verglichen:

(a) $\Delta p = \rho_{mess1} - \rho_{mess2}$

Von der Größe der Differenz werden Rückschlüsse auf den Systemzustand (normal oder abnormal) gezogen und das Ergebnis angezeigt (Alarm). Eine Diagnose der Ursache ist im allgemeinen nicht möglich.

Die berechnete Reaktivität steht folgendermaßen mit den diversitären Meßwerten in Beziehung:

(b) $\rho'_{mess2} = \beta_P \cdot \delta P + \beta_T \delta T_I + \beta_W \delta W + \beta_{CR} \delta h + \beta_{CR,O}$

wobei

| | |
|---|---|
| h | = Regelstabposition, |
| P | = Coreleistung, |
| $T_I$ | = Eingangstemperatur, |
| W | = Durchsatz, |
| $\beta_{CR,O}$ | = Reaktivitätsbeitrag, der nicht mit den Meßwerten korreliert |
| $\delta(\cdot)$ | = Störung um den Arbeitspunkt |
| $\beta_{CR}$ | = Stab(Bank)-Koeffizient |
| $\beta_P$ | = Leistungskoeffizient |
| $\beta_T$ | = Temperaturkoeffizient |
| $\beta_W$ | = Durchsatzkoeffizient |

ist.

Die Differenz $\Delta\rho$ erklärt sich also aus dem Unterschied der tatsächlichen und der im Modell (b) verwendeten Koeffizienten $\beta_B$, $\beta_T$, $\beta_W$, $\beta_{CR}$ und $\beta_{CR,O}$. Sie zeigt nur dann zuverlässig einen abnormalen Zustand an, wenn diese Koeffizienten hinreichend genau bekannt sind und von normalen Betriebsbedingungen nicht beeinflußt werden.

In einem Artikel von J.C. Gauthier et al., "Comparateur de Réactivité" IAEA-SM-244/28, September 1979, Seite 429 - 446, werden Gleichungen angegeben, die die Abhängigkeit der in (b) definierten Reaktivitätskoeffizienten von den zeitlich veränderlichen thermohydraulischen Größen und von den physikalischen Reaktivitätsbeiträgen (wie z. B. Doppler-Effekt, axiale Ausdehnung, Bowing-Effekt, Gitterplatten-Beitrag, etc.) erkennen lassen. Diese Abhängigkeiten bewirken, daß die Bilanz (a) nur bei stationärem Anlagenbetrieb einsatzfähig ist. Aber auch im stationären zustand ist die Aussagefähigkeit sowohl der Bilanz $\Delta\rho$ als auch der Koeffizienten $\beta_P$, $\beta_T$ und $\beta_W$ beschränkt, da sich verschiedene Effekte gegenseitig kompensieren können.

Eine weitere Schwierigkeit der konventionellen Reaktivitätsbilanz-Überwachung ist die quantitative Berücksichtigung der Reaktivitätsbeiträge der Regelstäbe. Der Reaktivitätswert der Stäbe kann sich im Laufe des Betriebs beträchtlich ändern, ohne daß es zu einer äquivalenten Positionsänderung gekommen ist (differential expansions). Außerdem können regelungsbedingte Stabbewegungen so klein sein, daß der Quantisierungsfehler der Positionsmessung die tatsächliche Positionsänderung dominiert.

Aufgabe der vorliegenden Erfindung ist ein möglichst leistungsfähiges Überwachungssystem für die Reaktivitätsbilanz bei gleichzeitiger Erweiterung der Diagnosemöglichkeiten von Reaktivitätsstörungen. Insbesondere soll eine hohe Überwachungsempfindlichkeit während stationärer und transienter Vorgänge erreicht werden. Darüberhinaus sollen die Reaktivitätsbeiträge der Stellstäbe laufend ohne Stab-Positionsmessung bestimmt und im Ausgangssignal des Bilanzmeters kompensiert werden. Auch die Wirkungen betriebsbedingter Abweichungen des Durchsatzes, der Eintrittstemperatur und der Stellstabbewegung auf die Reaktivität soll bestimmt und im Ausgangssignal des Bilanzmeters kompensiert werden zur Aufrechterhaltung der Überwachungsempfindlichkeit gegenüber abnormalen Vorgängen auch bei

schnellen Arbeitspunktverschiebungen.

Zur Lösung dieser Aufgabe wird ein Verfahren nach dem Hauptanspruch vorgeschlagen, wie es im folgenden mit weiteren Ausgestaltungen erläutert wird:

Dadurch, daß nach Anwendung von rekursiven Parameter-Schätzverfahren außer den direkten Meßwerten auch indirekte Meßwerte zur Verfügung stehen, läßt sich eine sehr viel umfassendere, globale Überwachung des Reaktorkerns realisieren als bisher. Es eröffnet sich die Möglichkeit, alle für die Berechnung der Reaktivitätsbeiträge einzelner Komponenten des Reaktorkerns wichtigen Parameter nicht nur als feste Speicherwerte anzusehen, die von Zeit zu Zeit kalibriert und korrigiert werden müssen, sondern vielmehr die Bestimmung aller Parameter und deren Überwachung gleichzeitig mit der Reaktivitätsbilanzüberwachung durchzuführen. Die zusätzlich verarbeiteten indirekten Meßwerte ermöglichen eine Bestimmung zusätzlicher Variablen, so daß eine sehr genaue Analyse aller Reaktivitätsbeiträge möglich wird. Gemäß dem Hauptanspruch wird nunmehr nicht direkt ein Alarm ausgelöst, wenn die Differenz $\Delta\rho$ aus der direkten Messung der Reaktivität und einer aus diversitären Messungen bestimmten Reaktivität $\rho_{mess2}$ einen vorgegebenen Sollwert überschreitet, sondern es werden zunächst die in $\rho_{mess2}$ verarbeiteten Parameter durch Angleich dieser Funktion an $\rho_{mess1}$ neu bestimmt, und erst wenn sich dabei Anomalien zeigen, wird ein Alarm mit detailierter Diagnosemöglichkeit veranlaßt. Die abhängigen Ansprüche beschreiben konkrete Ausführungsmöglichkeiten des Verfahrens, wie sie sich beispielsweise an einem schnellen natriumgekühlten Brutreaktor ergeben.

Zusätzlich zu den Meßwerten der Neutronendichte, der Eintrittstemperatur, des Durchsatzes und der Reaktivität werden "indirekte Messungen" verarbeitet, wie sie durch rekursive Parameter-Schätzverfahren bestimmbar sind (siehe EP-A-65 155).

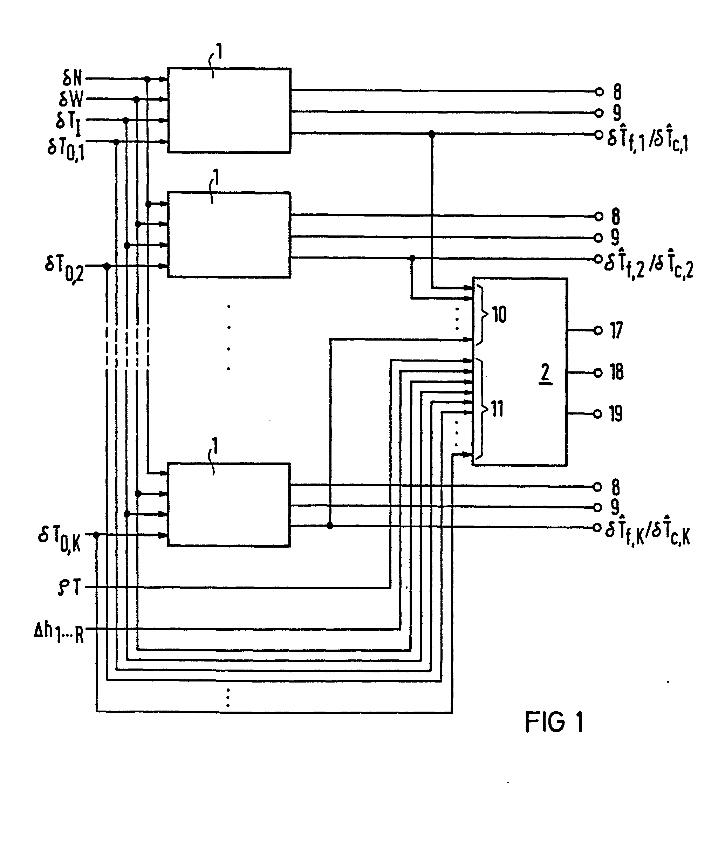

Das Zusammenwirken der Überwachungsschaltung für Kühlungsstörungen mit dem Reaktivitätsbilanzmeter zeigt die weiter unten genauer beschriebene Figur 1 der Zeichnung. Die Schätzwerte der Brennstofftemperatur, der Hüllrohrtemperatur und der Kühlmitteltemperatur werden, zusammen mit den übrigen Meßwerten, einem Vorverarbeitungsmodul des Bilanzmeters zugeführt. Dort werden in 2 nacheinander geschalteten Funktionseinheiten (Vorhersage- und radiale Mittelungsfunktion) die Zustandsvariablen ermittelt, die eine Darstellung der Reaktivitätsbilanz durch nahezu konstante und physikalisch eindeutige Modellkoeffizienten ermöglichen.

(c) $\rho_{mess2} = (\beta_D + \beta_M)\delta T_f + \beta_{A2}\delta T_{cl} + \beta_c\delta T_c + \beta_G\delta T_l^* + \beta_B \frac{\delta T_{SO} - \delta T_{SI}}{T_{O,0} - T_{I,0}} + \beta_{CR}\delta h + \beta_{CR,0}$

wobei

$\beta_D$ = Dopplerkoeffizient

$\beta_A$ = axialer Ausdehnungskoeffizient (teilweise an die Brennstofftemperatur gekoppelt, $\beta_{A1}$, und teilweise an die Hüllrohr-Temperatur, $\beta_{A2}$)

$\beta_C$ = Kühlmitteltemperaturkoeffizient

$\beta_G$ = Gitterplattenkoeffizient

$\beta_B$ = Bowing-Koeffizient

$\beta_{CR}, \beta_{CR,0}$ = Regelstabekoeffizienten

$T_f$ = Brennstofftemperatur,

$T_C$ = Kühlmitteltemperatur

$T_{cl}$ = Hüllrohrtemperatur

$T_l^*$ = Gitterplattentemperatur

$T_{SO}, T_{SI}$ = Temperaturen der Brennelementkästen (z. B. oben und unten)

$h$ = Stabposition (Bankposition)

ist.

Gleichung (c) ist eine in der Kernphysik allgemein bekannte Beschreibung der Reaktivitätsbilanz, die den Vorteil hat daß die Koeffizienten $\beta_j$ besonders einfach sind.

Die Brennelement-spezifischen Daten könnten grundsätzlich auch direkt dem Bilanzmeter zugeführt werden (ohne radiale Mittelung). Die Bilanzgleichung (c) ist in diesem Fall als Summe der Reaktivitätsbeiträge der einzelnen Brennelemente aufzufassen:

(d) $\rho''_{mess2} = \sum_{v=1}^{K} \{(\beta_D + \beta_{A1})_v\delta T_{f,v} + \beta_{A2,v}\delta T_{cl,v} + \beta_{c,v}\delta T_{c,v} + \beta_{B,V} \cdot \frac{\delta T_{SO,V} - \delta T_{SI,V}}{T_{O,V,0} - T_{I0}}\} + \beta_G\delta T_l^* + \beta_{CR}\delta h + \beta_{CR,0}$

$K$ = Anzahl der Brennelemente

Im Parameter-Schätzmodul (siehe weiter unten) würden bei diesen Ausführungen die Brennelementbezogenen Koeffizienten $\beta_{j,v}$ bestimmt anstatt der globalen Koeffizienten $\beta_j$.

Die aufbereiteten direkten und indirekten Meßgrößen gelangen dann zum Parameter-Schätzmodul und Reaktivitätsbilanzmodul. Das Parameter-Schätzmodul hat die Aufgabe, die Koeffizienten $\beta_j$ über die direkten und indirekten Messungen des Core-Zustandes mit Hilfe der Methode der kleinsten Quadrate zu bestimmen.

Dabei dient Gleichung (c) als Meßwertgleichung mit $\rho_{mess2}$ ersetzt durch $\rho_{mess1}$

(e) $\rho^K{}_{mess1} = M^K \cdot \beta + \zeta^K$
$M^K = [m_1{}^K, m_2{}^K, \dots]$,
$m_1{}^K = \delta T_f{}^K, m_2{}^K = \delta T_{cl}{}^K, \dots$
Der Index K bezeichnet die Abtastzeit,
$\beta$ ist der Parametervektor und
$\zeta$ ist der statistische Fehler der Messung $\rho$.

Die Gleichungen zur rekursiven Berechnung des Parametervektors stehen z. B. in EP-A-65 155. Der Schätzvorgang wird entweder periodisch oder vom Diagnosemodul immer dann angeregt, wenn z. B. die Reaktivitätsbilanz eine vorgegebene Schranke übersteigt und dauert etwa 200 Abtastintervalle. Der Parameter-Schätzmodul liefert also den zeitlichen Verlauf der Parameter unter der Annahme, daß sich diese während des Kalibriervorganges nicht ändern.

Im Reaktivitätsbilanzmodul wird laufend die Differenz (a) berechnet, deren Erwartungswert nunmehr nur dann von Null verschieden ist, wenn die Modellkoeffizienten $\beta_j$ nicht den tatsächlichen Verhältnissen entsprechen. Das $\Delta\rho$-Signal wird mit Hilfe eines digitalen Filters 2. Ordnung geglättet. Die thermohydraulischen Größen beeinflussen die Bilanz nicht mehr außerhalb der Toleranzgrenzen von etwa 0.5 FIG.

Der Doppler- und der axiale Ausdehnungskoeffizient sind nur schwach abhängig von der Brennstoff- bzw. Hüllrohrtemperatur, so daß diese Abhängigkeit nur bei Arbeitspunktverschiebungen berücksichtigt werden muß. Es genügt für einen Feinabgleich, die folgende Kompensationsformel zu benutzen:

$\beta_D + \beta_A = (\beta_{D,0} + \beta_{A,0}) \cdot f(T_f, T_{f,0})$
wobei die Funktion $f(T_f, T_{f,0})$ allgemein bekannt ist und
der Index O das Ergebnis der letzten Kalibrierung bezeichnet.

Die wirksame Regelstabreaktivität wird als Differenz der gemessenen Gesamtreaktivität und der geschätzten Rückkopplungsreaktivität $\hat\rho_{fd}$ bestimmt

(f) $\hat\rho_{CR} = \rho_{mess\,1} - \hat\rho_{fd}$

wobei

(g) $\hat\rho_{fd} = (\beta_D + \beta_{A1})\delta\hat T_f + \beta_{A2}\delta\hat T_{cl} + \beta_G \cdot \delta T_I{}^* + \beta_B \frac{\delta\hat T_{so} - \delta\hat T_{si}}{\hat T_{0,0} - \hat T_{i,0}}$

und mit einem digitalen Filter 2. Ordnung geglättet. Diese über die Positionsmessung nur schwer bzw. ungenau erfaßbare Größe ist mit Hilfe von (f) sehr genau bestimmbar. Systematische Fehler würden nur dann auftreten, wenn sich die Rückkopplungskoeffizienten $\beta_j$ seit dem letzten Parameterschätzvorgang in unbekannter Weise geändert hätten. In diesem Fall würde aber vom $\Delta\rho$-Signal eine neue Kalibrierung eingeleitet.

Natürlich fällt auch der Stellstabreaktivitätsbeitrag über die Positionsmessung an, wobei

(h) $\Delta\rho_{CR} = \beta_{CR}\Delta h$

Der Koeffizient $\beta_{CR}$ wird üblicherweise über aufwendige Kalibrierexperimente bestimmt, die nach etwa halbjähriger Betriebszeit wiederholt werden müssen. Die Differenz (f) erlaubt nun die Bestimmung von $\beta_{CR}$ immer dann (während des Betriebs), wenn Regelstabbewegungen zu verzeichnen sind.

Die gleichzeitige Verfügbarkeit des Schätzwertes von $\rho_{CR}$ nach Gleichung (f) und (h) erlaubt die getrennte Bestimmung von

(i) $\beta_{CR}\delta h$ und $\beta_{CR,0}$

Der konstante, nicht positionsabhängige Term gibt Aufschluß über die relative Lageänderung der Stäbe (differential expansion) und alle die Rückkopplungsbeiträge, die nicht mit Zustandsgrößen gekoppelt werden können. Es ist zu erwarten, daß eine Aufschlüsselung von $\beta_{CR,0}$ mit Hilfe einer "Integrierten Coreüberwachung" zu erreichen ist, bei der z. B. akustische Signale mit spontanen Änderungen von $\Delta\rho_{CR,0}$ korreliert werden können.

An den Ausgängen des Parameter-Schätzmoduls und des Reaktivitätsbilanzmoduls stehen dem Diagnosemodul die folgenden Größen zur Klassifizierung des Corezustandes und zur Identifizierung der Ursachen einer eventuellen Anomalie zur Verfügung:

Reaktivitätskoeffizienten, $\beta_j$, von (c) als Funktion der Zeit;
indirekte Meßgrößen, $T_f$, $T_c$, usw.

direkte Meßgrößen der Coreaußeninstrumentierung

Erwartungswert der Reaktivitätsbilanz als Indikator von Anomalien, der den Parameter-Schätzvorgang einleitet, aber (im Gegensatz zum konventionellen Bilanzmeter) keinen Alarm auslöst.

Die einzelnen, den obigen Koeffizienten entsprechenden Reaktivitätsbeiträge fallen ebenfalls an, haben aber keine zusätzliche Bedeutung für die Diagnose. Sie können aber die zur Reaktivitätsbilanz beitragenden Effekte in ihrer relativen Größe zueinander verdeutlichen.

Wie bereits ausgeführt, fallen ein Teil der direkten und indirekten Meßgrößen brennelementbezogen an und erlauben eine radiale Aufschlüsselung der Reaktivitätsbeiträge (d. h. brennelementbezogen). Neben der Beobachtung der zeitlichen Änderungen kann man also auch die Reaktivitätskoeffizienten verschiedener Brennelemente vergleichen und das Ergebnis zu einer Lokalisierung des beobachteten Effekts heranziehen. Diese besonders für große Kerne wichtige Überwachungsfunktion wurde bisher nicht näher untersucht.

Kenntnis der Koeffizienten des Modells (c) und der thermohydraulischen Parameter ermöglicht die Bestimmung der Koeffizienten des konventionellen Modells (b) für stationären und instationären Betrieb. Die Umkehrung gilt nicht. Das neue Bilanzmeter erfüllt also auch die Funktion des konventionellen Bilanzmeters.

Eine Anordnung zur Durchführung des Verfahrens ist im Anspruch 7 angegeben. Diese sei im folgenden anhand der Zeichnung, welche ein Ausführungsbeispiel der Erfindung beschreibt, näher erläutert.

Es zeigen die

Fig. 1    eine Übersicht über das globale Überwachungssystem des Reaktorkerns,

Fig. 2    den genaueren Aufbau des Reaktivitätsbilanzmeters 2 aus Fig. 1 und

Fig. 3    das Vorverarbeitungsmodul 21 des Reaktivitätsbilanzmeters.

In Fig. 1 kommen von der linken Seite die Leitungen von der Außeninstrumentierung des Reaktorkerns, d. h. die direkten Meßgrößen. Die Bezeichnungen sind die gleichen wie in der bisherigen Beschreibung, nur die direkt gemessene Reaktivität ist mit $\rho T$ bezeichnet. Für jedes Brennelement ist ein Schätzmodul 1 vorhanden, welches aus direkten Meßgrößen zusätzliche indirekte Meßgrößen (Parameter und Zustand) z. B. durch die Methode der kleinsten Quadrate bzw. durch parameter-adaptive Kalmanfilter ermittelt. Jedes dieser Schätzmodule 1 erhält außer den Meßwerten $\delta N$, $\delta W$, $\delta T_l$ noch den jeweiligen Meßwert der Austrittstemperatur am zugehörigen Brennelement $\delta T_{o,n}$ (n = 1, ...., K; K = Anzahl der Brennelemente).

Am Ausgang der Schätzmodule 1 liegen unter anderem die indirekten Meßwerte als Zustandsschätzwerte $\delta\hat{T}_{f,n}$ und $\delta\hat{T}_{c,n}$ und als Parameterschätzwerte vor. Außerdem ermöglichen die Schätzmodule 1 eine Klassifikation von Kühlungsstörungen, welche über die Leitung 8 ausgegeben wird, und liefern weitere thermohydraulische Parameter, welche über die Leitung 9 weitergegeben werden. Alle direkten Meßwerte 11 werden außerdem einem Reaktivitätsbilanzmeter 2 zugeführt, in welches auch die indirekten Meßwerte 10 aus allen Schätzmodulen 1 eingegeben werden. Am Ausgang des Reaktivitätsbilanzmeters 2 liegen einerseits die Reaktivitätsparameter in Abhängigkeit von der Zeit an (Ausgang 17) und andererseits ermöglicht eine Signalleitung 19 die Ausgabe eines Diagnosesignals für Reaktivitätsstörungen. Ein weiterer Ausgang 18 dient der Kalibrierkontrolle für die $\beta$-Parameter aus Gleichung (d).

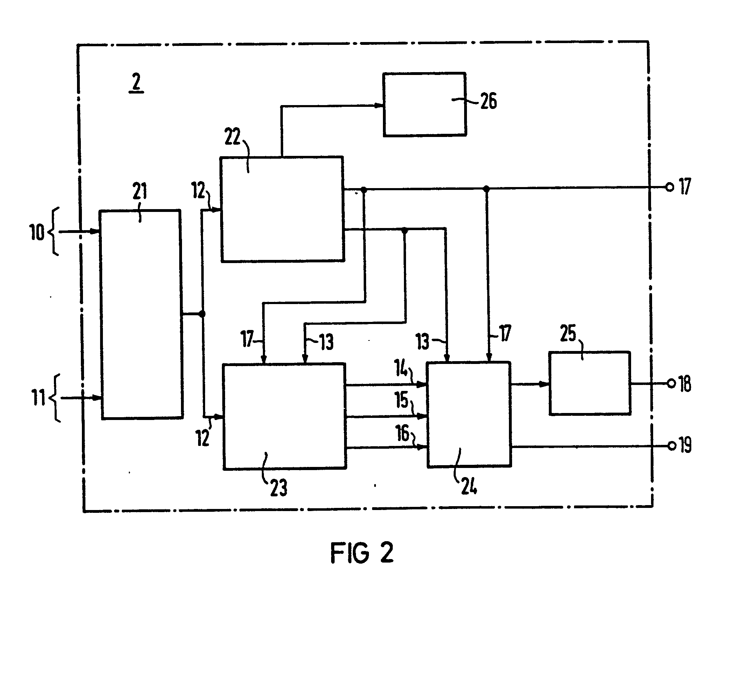

Der Innenaufbau des Reaktivitätsbilanzmeters 2 ist in Fig. 2 ausführlicher dargestellt. Die indirekten Meßwerte 10 und die direkten 11 gelangen nach Eintritt in das Reaktivitätsbilanzmeter 2 zunächst in ein Vorverarbeitungsmodul 21, in welchem die Meßwerte entsprechend einfachen Modellen umgerechnet werden und Mittelwerte über alle Brennelemente bzw. Stellstäbe gebildet werden. Die am Ausgang 12 anliegenden vorverarbeiteten indirekten und direkten Meßwerte werden an zwei Stellen weitergeleitet. Einerseits gelangen sie zu einem Reaktivitätsbilanzmodul 23 und andererseits zu einem Parameter-Schätzmodul 22. Im Parameterschätzmodul 22 werden periodisch oder nach Bedarf alle Reaktivitätsparameter $\beta_j$ durch Angleich der Funktion (c) an die direkt gemessene Reaktivität $\rho_{mess1}$ (z. B. nach der Methode der kleinsten Fehlerquadrate) neu berechnet. Das Parameter-Schätzmodul 22 enthält Speicher zur Speicherung dieser Parameter und einen Rechenteil zur jeweiligen Neuberechnung. Bei Bedarf können die Ergebnisse jeder Neuberechnung in einem Ausgabegerät 26, beispielsweise einem Drucker, aufgezeichnet werden. Die jeweils aktuellen Parameter werden über die Leitungen 13 und 17 an das Reaktivitätsbilanzmodul 23 weitergeleitet. Mit den aktuellen Parametern kann im Reaktivitätsbilanzmodul 23 die Berechnung von $\rho_{mess2}$ nach der Gleichung (c) und ein Vergleich des Ergebnisses mit $\rho_{mess1}$ vorgenommen werden. Dies erfolgt beispielsweise mit Hilfe eines Mikroprozessors. Der Differenzwert $\Delta\rho$ und die übrigen Reaktivitätsbeiträge werden über die Ausgänge 14, 15 und 16 an ein Diagnosemodul 24 weitergegeben. Diesem Diagnosemodul 24 werden auch die Ausgangswerte des Parameter-Schätzmoduls 22 über dessen Ausgänge 13 und 17 zugeführt. Im Diagnosemodul werden alle Daten auf Einhaltung von bestimmten Sollwertgrenzen überwacht, und bei Überschreitung einer Sollwertgrenze wird ein Alarm mit entsprechender Anzeige des verantwortlichen Parameters über die Leitung 19 ausgelöst. Bei Bedarf ist im Zusammenhang mit ohnehin notwendigen betriebsbedingten Positionsänderungen der Stellstäbe zusätzlich eine Rekalibrierung der $\beta$-Parameter mit Hilfe des Kalibrier-Kontrollmoduls 25 möglich. Entsprechende Anweisungen erfolgen über den Ausgang 18.

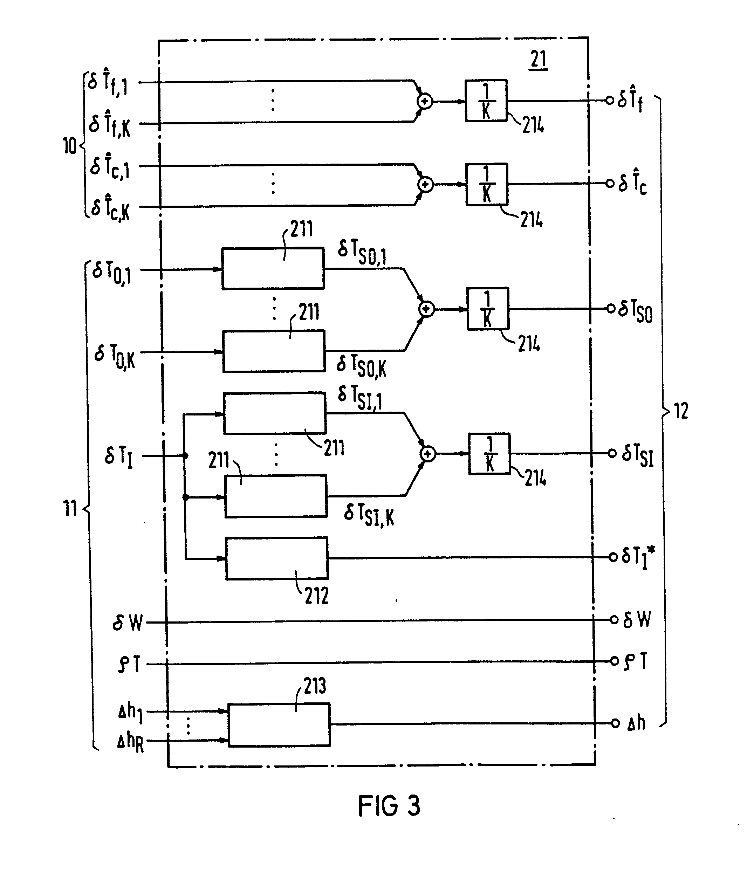

In Fig. 3 ist weiterhin das Vorverarbeitungsmodul 21 im Detail dargestellt. Die indirekten 10 und direkten 11 Eingangsgrößen werden dort in die Größen umgewandelt, welche für eine Darstellung der Reaktivität $\rho_{mess2}$ nach der Gleichung (c) benötigt werden. Für die indirekten Meßgrößen bedeutet dies lediglich eine Mittelung über alle Brennelemente, welche durch eine einfache Addition und eine Division durch K in dem Mittelwertbildner 214 erfolgt. Bei den direkten 11 Meßwerten wird eine etwa kompliziertere Umformung vorgenommen. Anhand eines einfachen Modells 211 für das thermische Verhalten der Brennelementhüllkästen

5

wird aus den Ausgangstemperaturen des Kühlmittels an jedem Brennelement $\delta T_{o,n}$ und der Kühlmitteleinlaßtemperatur $\delta T_I$ unter anschließender Addition und Mittelwertbildung die durchschnittliche Temperatur $T_{SO}$ am oberen Ende der Hüllkästen und die durchschnittliche Temperatur $T_{SI}$ am unteren Ende der Hüllkästen ermittelt. Mit Hilfe eines anderen einfachen Modells 212 wird aus der Kühlmitteleingangstemperatur $\delta T_I$ die Temperatur der Gitterplatte am unteren Ende der Brennelemente $\delta T_I^*$ berechnet. Schließlich wird mit Hilfe eines Modells 213, welches das Zusammenwirken der Stellstäbe in einer Stellstabbank berücksichtigt, aus den einzelnen Positionen der Stellstäbe ein Mittelwert $\Delta h$ ermittelt. Unter den Modellen 211, 212 und 213 versteht man einfache arithmetische Umformungen gemäß bestimmten angenäherten Modellvorstellungen unter Berücksichtigung von Wärmekapazität und Wärmeleitfähigkeit etc. der einzelnen Komponenten. Die im Vorverarbeitungsmodul ermittelten Größen 12 eignen sich für eine Darstellung der Reaktivität $\rho_{mess2}$ nach Gleichung (c) und können somit an das Parameter-Schätzmodul 22 und das Reaktivitätsbilanzmodul 23 weitergeleitet werden.

Die beschriebene Anordnung stellt lediglich ein Ausführungsbeispiel für ein erfindungsgemäßes globales Überwachungssystem der Reaktivität eines Kernreaktors dar.


## Patentansprüche

1. Verfahren zur Überwachung der Reaktivitätsbilanz des Kerns eines Kernreaktors, insbesondere eines flüssigmetallgekühlten schnellen Brutreaktors mit einer Vielzahl von Brennelementen und Stellstäben, und zur Diagnose von Reaktivitätsstörungen, wobei die direkt, z. B. durch den Neutronenfluß, gemessene Reaktivität ($\rho_{mess1}$) mit einer aus diversitären Messungen bestimmten Reaktivität ($\rho_{mess2}$) verglichen wird, gekennzeichnet durch folgende Merkmale:

a) Der Vergleichswert ($\rho_{mess2}$) wird als Funktion von direkten und indirekten Meßwerten durch Verknüpfung mit allen relevanten Reaktivitätsparametern gewonnen.

b) Alle direkten und indirekten Meßwerte werden außerdem periodisch oder nach Bedarf zur Neuberechnung der Reaktivitätsparameter durch Angleichen von dem Vergleichswert ($\rho_{mess2}$) an die direckt gemessene Reaktivität ($\rho_{mess1}$) verwendet.

c) Bei Überschreiten einer Toleranzschwelle durch die Differenz zwischen der direktgemessenen Reaktivität und dem Vergleichswert ($\Delta \rho = \rho_{mess1} - \rho_{mess2}$) wird (kein Alarm ausgelöst, sondern) automatisch eine Neuschätzung aller Parameter in Anpassung an die direkt gemessene Reaktivität ($\rho_{mess1}$) gestartet (mit der Folge, daß $\Delta \rho$ wieder klein wird).

d) Die Reaktivitätsparameter werden auf Einhaltung bestimmter Sollwertgrenzen überwacht.

e) Überschreitet ein Reaktivitätsparameter seine Grenzwerte, so wird ein Alarm ausgelöst, wobei der auslösende Parameter angezeigt wird.

2. Verfahren nach Anspruch 1, gekennzeichnet durch folgende Merkmale:

a) Die direkten (11) Meßwerte sind die Stellstabpositionen ($\Delta h_i$ ($i = 1, ..., R$; R = Anzahl der Stellstäbe)), die Gesamtleistung (P) und/oder die Reaktivität, die Eintrittstemperatur des Kühlmittels ($T_I$), der Gesamtdurchsatz des Kühlmittels (W) und die Austrittstemperatur des Kühlmittels an jedem Brennelement ($\delta T_{o,n}$ ($n = 1, ..., K$; K = Anzahl der Brennelemente)).

b) Die indirekten (10) Meßwerte sind die nach einem parameter-adaptiven Kalmanfilter geschätzten Werte der lokalen Brennstofftemperatur ($\delta T_{f,n}$) und der lokalen Kühlmitteltemperatur ($\delta T_{c,n}$) an jedem Brennelement.

c) In einem Vorverarbeitungsmodul (21) dem die direkten (11) und die indirekten (10) Meßwerte zugeleitet werden, wird entsprechend einfachen Modellen (211) die Hüllkastentemperatur am Einlaß ($\delta T_{sI,n}$) bzw. am Auslaß ($\delta T_{so,n}$) für jedes Brennelement bestimmt.

d) In dem Vorverarbeitungsmodul (21) wird zusätzlich anhand eines Modells die Temperatur der Gitterplatte am Fuß der Brennelemente ($\delta T_I^*$) aus $\delta T_I$ berechnet.

3. Verfahren nach Anspruch 2, gekennzeichnet durch folgende Merkmale:

a) In einer zweiten Stufe (214) des Vorverarbeitungsmoduls (21) werden Mittelwerte z. B. über alle Brennelemente von $\delta T_f$, $\delta T_c$, $\delta T_{so}$, und $\delta T_{sI}$ gebildet.

b) Entsprechend einem Modell (213) der Stellstabbank wird ein Mittelwert $\Delta h$ der Stellstabpositionen gebildet.

c) Die Werte $\delta T_f$, $\delta T_c$, $\delta T_{so}$, $\delta T_{sI}$, $\delta T_I$ und $\Delta h$ sowie die unveränderten Werte $\delta W$ und $\rho T$ werden vom Ausgang (12) des Vorverarbeitungsmoduls (21) sowohl einem Reaktivitätsbilanz-Modul (23) als auch einem Parameter-Schätzmodul (22) zugeführt.

4. Verfahren nach Anspruch 3, gekennzeichnet durch folgende Merkmale:

a) Das Parameter-Schätzmodul (22) speichert aktuelle Werte aller reaktivitätsrelevanten Parameter ($\beta_i$) und berechnet diese auch periodisch oder bei Bedarf neu durch Angleich der Funktion

$$\rho_{mess1} = (\beta_D + \beta_{A1})\delta T_f + \beta_{A2}\delta T_{cl} + \beta_C \delta T_C + \beta_G \delta T_{I^*} + \beta_B \frac{\delta T_{so} - \delta T_{sI}}{T_{o,o} - T_{I,o}} + \beta_{CR}\Delta h + \beta_{CR,O}$$

an den jeweils aktuellen Wert von $\rho_{mess1}$, wobei

$\beta_D$ = Dopplerkoeffizient

$\beta_A$ = axialer Ausdehnungskoeffizient (teilweise an die Brennstofftemperatur gekoppelt, $\beta_{A1}$, und teilweise an die Hüllrohr-Temperatur gekoppelt $\beta_{A2}$)
$\beta_C$ = Kühlmitteltemperaturkoeffizient
$\beta_G$ = Gitterplattenkoeffizient
$\beta_B$ = Bowing-Koeffizient
$\beta_{CR}$, $\beta_{CR,0}$ = Regelstäbekoeffizienten
bedeuten.

b) Das Reaktivitätsbilanzmodul (23) berechnet nach obiger Formel mit dem aus dem Parameter-Schätzmodul (22) jeweils zugeleiteten (13, 17) Parameter $\rho_{mess2}$ und bildet die Differenz $\Delta\rho$ zu $\rho_{mess1}$.

c) Bei Überschreiten einer vorgegebenen Toleranzgrenze durch $\Delta\rho$ wird das Parameterschätzmodul (22) automatisch zu einem Neuangleich der Funktion $\rho_{mess2}$ durch Variation der Parameter $\beta_j$ (beispielsweise nach der Methode der kleinsten Fehlerquadrate) an den Wert von $\rho_{mess1}$ angestoßen.

d) Die neuen Werte der $\beta_j$ werden gespeichert und auf Einhaltung der Sollwertgrenzen in einem Diagnosemodul (24) überwacht.

5. Verfahren nach Anspruch 4, <u>gekennzeichnet durch</u> folgende Merkmale:

a) Dem Diagnosemodul (24) werden alle zur Verfügung stehenden Daten zugeleitet, d. h:
Die Rückopplungsparameter (17), $\beta_D$, $\beta_A$, $\beta_C$, $\beta_G$ und $\beta_B$;
die Regelstabparameter (13), $\beta_{CR}$, $\beta_{CR,0}$;
die Reaktivitätsbilanz $\Delta\rho$,
die mittlere Position der Stellstabbank $\Delta h$ und
die direkten und indirekten Meßgrößen.

b) Das Diagnosemodul registriert die Werte aller Parameter in Abhängigkeit von der Zeit t und meldet durch Anzeige oder Ausdruck Anomalien.

6. Verfahren nach Anspruch 5, <u>gekennzeichnet durch</u> folgendes Merkmal:

Für die sehr langsam veränderlichen Regelstabparameter $\beta_{CR}$ wird bei Bedarf eine Neukalibrierung z. B. im Zuge einer ohnehin betriebsbedingten Regelstabpositionsänderung von dem Kalibrier-Kontrollmodul (25) ausgelöst, sofern Unstimmigkeiten bei den Reaktivitätsbeiträgen der Regelstäbe auftreten.

7. Verfahren nach einem der vorhergehenden Ansprüche, <u>gekennzeichnet durch</u> folgende Merkmale:

a) Die wirksame Regelstabreaktivität $\hat{\rho}_{CR}$ der Stellstäbe wird aus der Differenz der direkt gemessenen Reaktivität $\rho_{mess1}$ und der geschätzten Rückkopplungsreaktivität $\hat{\rho}_{fd}$ bestimmt, $\hat{\rho}_{CR} = \rho_{mess1} - \hat{\rho}_{fd}$.

b) Die positionsbedingten und die nicht von meßbaren Positionsänderungen abgeleiteten externen Reaktivitätsbeiträge werden separiert, indem die wirksame Reaktivität $\hat{\rho}^1_{CR}$ zu einem Zeitpunkt $t_1$ mit

$$\hat{\rho}^2_{CR} = \hat{\rho}^1_{CR} + \beta_{CR} \cdot \Delta h$$

verglichen wird. Die Differenz $\hat{\rho}^1_{CR} - \hat{\rho}^2_{CR}$ entspricht der nicht von den Stellstabpositionen ableitbaren externen Reaktivität, wobei $\Delta h$ die Änderung der Stellstabpositionen seit dem Zeitpunkt $t_1$ bedeutet.

8. Verfahren nach einem der vorhergehenden Ansprüche, <u>gekennzeichnet durch</u> folgende Merkmale:

a) Das Bilanzsignal $\Delta\rho$ stößt bei Überschreiten eines Schwellwertes einen Kalibriervorgang an (anstatt Alarm auszulösen). Der Kalibriervorgang von ca. 1 - 2 Minuten Dauer besteht im Wesentlichen aus einer kleinen Störung der Stellstabpositionen und/oder des Primärdurchsatzes um den jeweiligen Arbeitspunkt nach einem vorgebbaren zeitlichen Profil und der Auswertung der im Übergangsverhalten der Meßgrößen enthaltenen Information im Parameter-Schätzmodul.

b) Alarm wird unter anderem dann gegeben, wenn das $\Delta\rho$-Signal auch nach Abschluß eines oder mehrerer Kalibriervorgänge den Schwellwert übersteigt.

9. Anordnung zur Durchführung des Verfahrens nach den Ansprüchen 1 bis 6, <u>gekennzeichnet durch</u> folgende Merkmale:

a) Die Anordnung enthält ein Vorverarbeitungsmodul (21), an dessen Eingang alle für das Verfahren benötigten direkten (11) und indirekten (10) Meßwerte des Kernes anliegen.

b) Der Ausgang (12) des Vorverarbeitungsmoduls, an dem die aufbereiteten Meßwerte anliegen, ist mit einem Parameter-Schätzmodul (22) und einem Reaktivitäts-Bilanzmodul (23) verbunden.

c) Das Parameter-Schätzmodul (22) enthält Speicher zur Speicherung aller benötigten Reaktivitätsparameter und einen Rechenteil zur periodischen oder nach Bedarf einzuleitenden Neuschätzung der Parameter in Anpassung an die zugeführten Meßwerte.

d) Die jeweiligen Parameter-Schätzwerte liegen am Ausgang (13, 17) des Parameter-Schätzmoduls (22) an.

e) Der Ausgang (13, 17) des Parameter-Schätzmoduls (22) ist mit dem Eingang des Reaktivitäts-Bilanzmoduls (23) und mit dem Eingang eines Diagnose-Moduls (24) verbunden.

f) Der Ausgang (14, 15, 16) des Reaktivitäts-Bilanzmoduls (23) ist ebenfalls mit dem Eingang des Diagnosemoduls (24) verbunden.

g) Das Diagnosemodul (24) weist Mittel zum Ausdruck oder zur Anzeige von Anomalitäten auf.

## Claims

1. Method for monitoring the reactivity balance of the core of a nuclear reactor, more particularly of a liquid metal cooled, fast breeder reactor, with a plurality of fuel elements and control rods, and for diagnosing reactivity disturbances, the reactivity measured directly, for example through the neutron flux, ($\rho_{mess1}$) being compared with a reactivity ($\rho_{mess2}$) determined from diverse measurements, characterized by the following features:

a) The comparative value ($\rho_{mess2}$) is obtained as function of direct and indirect measured values by means of connection with all relevant reactivity parameters.

b) All direct and indirect measured values are moreover used, periodically or as required, for the recalculation of the reactivity parameters by means of the adjustment of the comparative value ($\rho_{mess2}$) to the directly measured reactivity ($\rho_{mess1}$).

c) With the exceeding of a tolerance threshold by the difference between the directly measured reactivity and the comparative value ($\Delta\rho = \rho_{mess1} - \rho_{mess2}$), a revaluation of all parameters is started automatically (as opposed to an alarm being emitted), matching the directly measured reactivity ($\rho_{mess1}$), (with the result that $\Delta\rho$ becomes small again).

d) The reactivity parameters are monitored with the observance of certain desired value limits.

e) If a reactivity parameter exceeds its limiting values, an alarm is then emitted, the emitting parameter being shown.

2. Method according to claim 1, characterized by the following features:

a) The direct (11) measured values are the control rod positions ($\Delta h_i$ (i = 1, ..., R; R = number of control rods)), the total output (P) and/or the reactivity, the entry temperature of the coolant ($T_I$), the overall throughput of the coolant (W) and the exit temperature of the coolant at each fuel element ($\delta T_{o,n}$. (n = 1, ..., K; K = number of fuel elements)).

b) The indirect (10) measured values are the values of the local fuel temperature ($\delta T_{f,n}$) and of the local coolant temperature ($\delta T_{c,n}$) at each fuel element, which values are estimated according to a parameter-adaptive Kalman filter.

c) in a pre-processing module (21) to which the direct (11) and the indirect (10) measured values are directed, corresponding to simple models (211), the covering case's temperature at the inlet ($\delta T_{sl,n}$) or at the outlet ($\delta T_{so,n}$) is determined for each fuel element.

d) In the pre-processing module (21), in addition, the temperature of the grid plate at the foot of the fuel elements ($\delta T_I^*$) is calculated from $\delta T_I$ with the help of a model.

3. Method according to claim 2, characterized by the following features:

a) In a second stage (214) of the pre-processing module (21) mean values are formed, for example over all fuel elements, of $\delta T_f$, $\delta T_c$, $\delta T_{so}$, and $\delta T_{sl}$.

b) Corresponding to a model (213) of the control rod layer, a mean value $\Delta h$ of the control rod positions is formed.

c) The values $\delta T_f$, $\delta T_c$, $\delta T_{so}$, $\delta T_{sl}$, $\delta T_I$ and $\Delta h$ as well as the unchanged values $\delta W$ and $\rho T$ are directed from the exit (12) of the pre-processing module (21) both to a reactivity-balance-module (23) and to a parameter-estimate-module (22).

4. Method according to claim 3, characterized by the following features:

a) The parameter-estimate-module (22) stores current values of all reactivity-relevant parameters ($\beta_i$) and also calculates these anew, periodically or if required, by adjusting the function

$$\rho_{mess2} = (\beta_D + \beta_{A1})\delta T_f + \beta_{A2}\delta T_{cl} + \beta_c\delta T_c + \beta_G\delta T_I^* + \beta_B \frac{\delta T_{so} - \delta T_{sl}}{T_{o,o} - T_{I,o}} + \beta_{CR}\Delta h + \beta_{CR,O}$$

to the respective current value of $\rho_{mess1}$, whereby the following applies:

$\beta_D$ = Doppler coefficient

$\beta_A$ = axial coefficient of expansion (partly connected to the fuel temperature, $\beta_{A1}$, and partly connected to the covering tube temperature, $\beta_{A2}$)

$\beta_C$ = coefficient of the coolant temperature

$\beta_G$ = grid plate coefficient

$\beta_B$ = Bowing coefficient

$\beta_{CR}, \beta_{CR,O}$ = coefficients of the control rods.

b) The reactivity-balance-module (23) calculates $\rho_{mess2}$ according to the above formula with the respective parameter fed (13, 17) from the parameter-estimate-module (22) and forms the difference $\Delta\rho$ to $\rho_{mess1}$.

c) With the exceeding of a specified tolerance threshold by $\Delta\rho$, the parameter-estimate-module (22) is automatically activated to a new adjustment of the function $\rho_{mess2}$ through variation of the parameters $\beta_i$ (for example according to the method of the smallest squared errors) to the value of $\rho_{mess1}$.

d) The new values of the $\beta_i$ are stored and monitored in a diagnosis module (24) with the observance of the desired value limits.

5. Method according to claim 4, characterized by the following features:

a) All available data are directed to the diagnosis module (24), the data being:

The feedback parameters (17), $\beta_D$, $\beta_A$, $\beta_C$, $\beta_G$ and $\beta_B$;

the control rod parameters (13), $\beta_{CR}$, $B_{CR,O}$;

the reactivity balance $\Delta\rho$,

the middle position of the control rod layer $\Delta h$ and

the direct and indirect measured quantities.

b) The diagnosis module registers the values of all parameters independently of the time t and reports

8

EP 0 108 265 B1

anomalies by means of a signal or a print-out.

6. Method according to claim 5, characterized by the following feature:

If required, a new calibration is emitted by the calibrating control module (25), for the very slowly changing control rod parameters $\beta_{CR}$, for example in the course of a change in the control rod position, conditional besides on operation, inasmuch as inconsistencies occur with the reactivity contributions of the control rods.

7. Method according to one of the preceding claims, characterized by the following features:

a) The effective control rod reactivity $\hat{\rho}_{CR}$ of the control rods is determined from the difference of the directly measured reactivity $\rho_{mess1}$ from the estimated feedback reactivity $\hat{\rho}_{fd}$, $\hat{\rho}_{CR} = \rho_{mess1} - \hat{\rho}_{fd}$.

b) The external reactivity contributions conditional on position, and those not diverted by measurable changes in position, are separated in that the effective reactivity $\hat{\rho}^1_{CR}$ is compared at a point in time $t_1$ with

$$\hat{\rho}^2_{CR} = \hat{\rho}^1_{CR} + \beta_{CR} \cdot \Delta h.$$

The difference $\hat{\rho}^1_{CR} - \hat{\rho}^2_{CR}$ corresponds to the external reactivity which cannot be diverted from the control rod positions, $\Delta h$ signifying the change of the control rod position since the point of time $t_1$.

8. Method according to one of the preceding claims, characterized by the following features:

a) When a threshold value is exceeded, the balance signal $\Delta\rho$ triggers a calibrating procedure (instead of emitting an alarm). The calibrating procedure, of approximately 1 - 2 minutes duration, essentially consists of a small disturbance of the control rod positions and/or of the primary throughput around the respective working point, according to a time profile which can be given and to the evaluation of the information in the parameter-estimate-module contained in the transient performance of the measured quantities.

b) An alarm, among other things, is then given when the $\Delta\rho$ signal exceeds the threshold value even after the completion of one or several calibrating procedures.

9. Arrangement for carrying out the method according to claims 1 to 6, characterized by the following features:

a) The arrangement contains a pre-processing module (21), all direct (11) and indirect (10) measured values of the core, which are necessary for the method, lying close to the entrance of the module.

b) The exit (12) of the pre-processing module, close to which the prepared measured values lie, is connected with a parameter-estimate-module (22) and a reactivity balance module (23).

c) The parameter-estimate-module (22) contains accumulators for the accumulation of all necessary reactivity parameters and a calculating unit for the revaluation of the parameters, periodically or initiated as required, conforming to the supplied measured values.

d) The respective parameter-estimate-values lie close to the exit (13, 17) of the parameter-estimate-module (22).

e) The exit (13, 17) of the parameter-estimate-module (22) is connected with the entrance of the reactivity balance module (23) and with the entrance of a diagnosis module (24).

f) The exit (14, 15, 16) of the reactivity balance module (23) is likewise connected with the entrance of the diagnosis module (24).

g) The diagnosis module (24) has means for expressing or signalling anomalies.

**Revendications**

1. Procédé de surveillance du bilan de réactivité du coeur d'un réacteur nucléaire, notamment d'un surrégénérateur rapide refroidi par du métal liquide, ayant un grand nombre d'assemblages combustibles et de barres de commande, et de diagnostic de perturbations de réactivité, en comparant la réactivité ($\rho_{mes\,1}$) mesurée directement, par exemple par le flux de neutrons à une réactivité ($\rho_{mes\,2}$) déterminée à partir de diverses mesures, remarquable par les caractéristiques suivantes:

a) la valeur de comparaison ($\rho_{mes\,2}$) est obtenue en tant que fonction de valeurs de mesure directes et indirectes, en liaison avec tous les paramètres pertinents de la réactivité;

b) toutes les valeurs de mesure directes et indirectes sont en outre utilisées, périodiquement ou suivant les besoins, pour recalculer les paramètres de réactivité en égalisant la valeur de comparaison ($\rho_{mes\,2}$) à la réactivité ($\rho_{mes\,1}$) mesurée directement;

c) lorsque la différence entre la réactivité mesurée directement et la valeur de comparaison ($\Delta\rho = \rho_{mes\,1} - \rho_{mes\,2}$) dépasse un seuil de tolérance, on lance (mais sans déclencher d'alerte) automatiquement une nouvelle évaluation de tous les paramètres en fonction de la réactivité ($\rho_{mes\,1}$) mesurée directement (avec la conséquence que ($\Delta\rho$) redevient petit);

d) les paramètres de la réactivité sont surveillés en vue de maintenir des limites de valeur de consigne définies;

e) si un paramètre de réactivité dépasse sa valeur limite, une alerte est déclenchée avec indication du paramètre de déclenchement.

2. Procédé suivant la revendication 1, remarquable par les caractéristiques suivantes:

a) les valeurs directes de mesure (11) sont les positions des barres de commande ($\Delta h_i$ ($i = 1, ..., R$; $R$ = nombre des barres de commande)), la puissance totale (P) et/ou la réactivité, la température d'entrée de l'agent de refroidissement ($T_I$), le débit total de l'agent de refroidissement (W) et la température de l'agent de refroidissement à la sortie de chaque assemblage combustible ($\delta T_{o,n}$ ($n = 1, ..., K$; $K$ = nombre des

9

assemblages combustibles));

b) les valeurs indirectes de mesure (10) sont les valeurs de la température locale du combustible ($\delta T_{f,n}$) et de la température locale de l'agent de refroidissement ($\delta T_{c,n}$) de chaque assemblage combustible évaluées par un filtre Kalman adapté aux paramètres;

c) dans un module de pré-traitement (21) auquel sont envoyées les valeurs directes de mesure (11) et les valeurs indirectes de mesure (10), on détermine, en fonction de modèles (211) simples, la température à l'entrée ($\delta T_{sl,n}$) et à la sortie ($\delta T_{so,n}$) de la gaine de chaque assemblage combustible;

d) dans le module de pré-traitement (21), on calcule, en outre à partir de ($\delta T_l$), au moyen d'un modèle la température du sommier au pied des assemblages combustibles ($\delta T_l{}^*$).

3. Procédé suivant la revendication 2, remarquable par les caractéristiques suivantes:

a) dans un deuxième étage (214) du module de pré-traitement (21), on forme les valeurs moyennes, par exemple pour tous les assemblages combustibles, de ($\delta T_f$, $\delta T_c$, $\delta T_{so}$, et $\delta T_{sl}$);

b) conformément à un modèle (213) du banc des barres de réglage, on forme une valeur moyenne ($\Delta h$) des positions des barres de réglage;

c) on envoie les valeurs ($\delta T_f$, $\delta T_c$, $\delta T_{so}$, $\delta T_{sl}$, $\delta T_l$ et $\Delta h$) ainsi que les valeurs ($\delta W$ et $\rho T$) non modifiées de la sortie (12) du module de pré-traitement (21) à la fois à un module de bilan de la réactivité (23) et à un module d'évaluation des paramètres (22).

4. Procédé suivant la revendication 3, remarquable par les caractéristiques suivantes:

a) le module d'évaluation de paramètres (22) mémorise les valeurs actuelles de tous les paramètres ($\beta_j$) pertinents pour la réactivité et les calcule aussi périodiquement ou en cas de besoin à nouveau en égalisant la fonction

$$\rho_{mes\,2} = (\beta_D + \beta_{A1})\delta T_f + \beta_{A2}\delta T_{cl} + \beta_c\delta T_c + \beta_G\delta T_l{}^* + \beta_B \tfrac{\delta T_{so} - \delta T_{sl}}{T_{o,0} - T_{l,0}} + \beta_{CR}\Delta h + \beta_{CR,0}$$

à la valeur actuelle de ($\rho_{mes\,1}$) avec les significations suivantes

$\beta_D$ = coefficient Doppler

$\beta_A$ = coefficient de dilatation axiale (associé pour partie à la température du combustible ($\beta_{A1}$) et associé pour partie à la température de la gaine ($\beta_{A2}$));

$\beta_C$ = coefficient de température de l'agent de refroidissement;

$\beta_G$ = coefficient du sommier

$\beta_B$ = coefficient Bowing

$\beta_{CR}$, $\beta_{CR,0}$ = coefficient des barres de réglage

b) le module du bilan de réactivité (23) calcule, suivant la formule ci-dessus, ($\rho_{mes\,2}$) avec le paramètre envoyé (13, 17) par le module d'évaluation de paramètres (22) et forme la différence ($\Delta\rho$) par rapport à ($\rho_{mes\,1}$);

c) lorsqu'une limite de tolérance prescrite de ($\Delta\rho$) est dépassée, le module d'évaluation des paramètres (22) est déclenché automatiquement en vue d'une nouvelle égalisation de la fonction ($\rho_{mes\,2}$) à la valeur de ($\rho_{mes\,1}$) par variation des paramètres ($\beta_j$) (par exemple par la méthode des moindres carrés);

d) les nouvelles valeurs des $\beta_j$, sont mémorisées et sont surveillées dans un module de diagnostic (24) afin de maintenir les valeurs limites de consigne.

5. Procédé suivant la revendication 4, remarquable par les caractéristiques suivantes:

a) on envoie au module de diagnostic (24) toutes les données dont on dispose, c'est-à-dire:

les paramètres de réaction (17), $\beta_D$, $\beta_A$, $\beta_C$, $\beta_G$ et $\beta_B$;

les paramètres des barres de réglage (13), $\beta_{CR}$, $\beta_{CR,0}$;

le bilan de réactivité $\Delta\rho$,

la position moyenne du banc de barres de commande $\Delta h$ et

les grandeurs de mesure directes et indirectes;

b) le module de diagnostic enregistre les valeurs de tous les paramètres en fonction du temps t et signale des anomalies par affichage ou par impression.

6. Procédé suivant la revendication 5, remarquable par la caractéristique suivante:

pour les paramètres de barres de commande $\beta_{CR}$ se modifiant très lentement, on déclenche, en cas de besoin, un recalibrage par le module de calibrage-contrôle (25), par exemple au cours d'une variation de position des barres de réglage nécessitée de toute façon par le fonctionnement, dans la mesure où il se produit des discordances dans les contributions des barres de réglage à la réactivité.

7. Procédé suivant l'une des revendications précédentes, remarquable par les caractéristiques suivantes:

a) la réactivité efficace $\hat{\rho}_{CR}$ des barres de réglage est déterminée par la différence entre la réactivité $\rho_{mes\,1}$ mesurée directement et la réactivite de réaction $\hat{\rho}_{fd}$ estimée $\hat{\rho}_{CR} = \rho_{mes\,1} - \hat{\rho}_{fd}$;

b) les contributions externes à la réactivité, dues à la position et provenant de variations de position qui ne sont pas mesurables, sont séparées en comparant la réactivité efficace $\hat{\rho}^1{}_{CR}$ à un instant $t_1$ à

$\hat{\rho}^2{}_{CR} = \hat{\rho}^1{}_{CR} + \hat{\beta}_{CR} \cdot \Delta h$.

La différence $\hat{\rho}^1{}_{CR} - \hat{\rho}^2{}_{CR}$ correspond à la réactivité externe qui ne peut pas se déduire des positions des barres de commande, $\Delta h$ étant la variation des positions des barres de commande depuis l'instant $t_1$.

8. Procédé suivant l'une des revendications précédentes, remarquable par les caractéristiques suivantes:

a) le signal de bilan $\Delta\rho$ déclenche, lors du dépassement d'une valeur de seuil, un processus de calibrage (au lieu de déclencher une alerte). Le processus de calibrage d'une durée de 1 à 2 minutes environ consiste

10

essentiellement à modifier légèrement les positions des barres de réglage et/ou le débit primaire autour du point de travail suivant une courbe donnée à l'avance en fonction du temps et à exploiter dans le module d'évaluation de paramètres l'information contenue dans le comportement transitoire des grandeurs de mesure;

b) l'alerte est donnée ensuite, entre autres quand le signal Δρ dépasse, après la fin d'une ou de plusieurs mesures de calibrage la valeur de seuil.

9. Dispositif pour la mise en oeuvre du procédé suivant les revendications 1 à 6, remarquable par les caractéristiques suivantes:

a) le dispositif contient un module de prétraitement (21), à l'entrée duquel sont appliquées toutes les valeurs de mesure directes (11) et indirectes (10) du coeur qui sont nécessaires pour le procédé;

b) la sortie (12) du module de prétraitement à laquelle sont appliquées les valeurs de mesure préparées est reliée à un module d'estimation de paramètres (2) et à un module de bilan de réactivité (23);

c) le module d'estimation des paramètres (22) comporte des mémoires destinées à mémoriser tous les paramètres de réactivité qui sont nécessaires et une partie de calcul pour réestimer périodiquement ou en cas de besoin les paramètres en fonction des valeurs de mesure appliquées;

d) les valeurs d'estimation des paramètres sont appliquées à la sortie (13, 17) du module d'estimation des paramètres (22);

e) la sortie (13, 17) du module d'estimation des paramètres (22) est reliée à l'entrée du module de bilan de la réactivité (23) et à l'entrée d'un module de diagnostic (24);

f) la sortie (14, 16) du module de bilan de la réactivité (23) est également reliée à l'entrée du module de diagnostic (24);

g) le module de diagnostic (24) comporte des moyens pour imprimer ou pour afficher des anomalies.

FIG 1

FIG 2

FIG 3